# EUROPÄISCHE PATENTANMELDUNG

(11) **EP 3 815 868 A1**
(43) Veröffentlichungstag der Anmeldung: **05.05.2021**
(21) Anmeldenummer: 19205860.0
(22) Anmeldetag: 29.10.2019
(51) Int. Cl.: B29C 39/10, B29C 39/42, B29C 39/38

(54) **HERSTELLUNG EINES GEGOSSENEN BAUTEILS MIT EINER ZUMINDEST TEILWEISE ELEKTRISCH LEITFÄHIGEN KOMPONENTE**

(71) Anmelder: Siemens Aktiengesellschaft, 80333 München (DE)
(72) Erfinder: Götz, Jürgen, 91315 Höchstadt/Aisch (DE); Hain, Stefan, 91090 Effeltrich (DE)

(57) **Zusammenfassung**

Die Erfindung gibt ein Verfahren zur Herstellung eines gegossenen Bauteils (5) mit einer zumindest teilweise elektrisch leitfähigen Komponente (2) an. Das Verfahren umfasst die folgenden Schritte:
- Platzieren (S1) der Komponente (2) in einer Gießform (1),
- Leiten (S2) eines elektrischen Stroms einer vorgebbaren Stromstärke durch die Komponente (2) und
- Vergießen (S3) einer Vergussmasse (4) in die Gießform (1), wobei die Komponente (2) vor dem Vergießen (S3) in der Gießform (1) platziert wird und wobei das Leiten (S2) des elektrischen Stroms zumindest teilweise vor, während und/oder nach dem Vergießen (S3) stattfindet.

Außerdem gibt die Erfindung eine Anordnung zur Herstellung eines gegossenen Bauteils (5) mit einer zumindest teilweise elektrisch leitfähigen Komponente (2) an.

## Beschreibung

### HINTERGRUND DER ERFINDUNG

### Gebiet der Erfindung

Die vorliegende Erfindung betrifft ein Verfahren zur Herstellung eines gegossenen Bauteils mit einer zumindest teilweise elektrisch leitfähigen Komponente. Die Erfindung betrifft des Weiteren eine Anordnung zur Herstellung eines gegossenen Bauteils mit einer zumindest teilweise elektrisch leitfähigen Komponente.

### Beschreibung des Stands der Technik

Bei der Herstellung von Gießharzdurchführungen schrumpft das Harz beim Aushärten in der Gießform. Es besteht die Gefahr, dass sich Spalte oder Lufteinschlüsse bilden, die die mechanische und dielektrische Festigkeit der Gießharzdurchführungen beeinträchtigen. Diese Gefahr besteht besonders dann, wenn sich eingebettete Teile (zum Beispiel elektrische Bauteile) in der Gießform befinden, von denen sich das Harz beim Aushärten und Schrumpfen ablöst.

Der Aushärteprozess lässt sich über die Temperatur des Harzes steuern. Höhere Temperaturen beschleunigen das Aus-härten. Durch Vorheizen der Form und der eingebetteten Teile lassen sich Zonen herstellen, in denen das Harz zu-erst fest wird, und solche, in denen das Harz länger flüssig ist und von denen es in Bereiche nachströmen kann, die schon fest werden und dadurch schrumpfen.

Bisher wurden dazu die Gießform und die eingebetteten Teile vor dem Verguss vorgeheizt oder es wurden Zonen mit höherer Temperatur mit Heizpatronen in der Wand der Gießform versehen. Während der Zeit des Einbaus der eingebetteten Teile kühlen die Gießform und die eingebetteten Teile jedoch ab, so dass sich undefinierte und möglicherweise ungleichmäßige Temperaturverhältnisse und damit ungünstige Abkühlverhältnisse ergeben.

Die Aufgabe der Erfindung besteht darin, eine Lösung zur Herstellung von Gießharzdurchführungen mit eingebetteten Teilen anzugeben.

### ZUSAMMENFASSUNG DER ERFINDUNG

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung.

Ein Aspekt der Erfindung besteht darin, bei der Herstellung eines gegossenen Bauteils die elektrische Leitfähigkeit einer mit einer Vergussmasse eingegossenen Komponente zu nutzen, um die Komponente über ohmsche Verluste zu erwärmen und so den Aushärteprozess der Vergussmasse zu steuern.

Die Erfindung beansprucht ein Verfahren zur Herstellung eines gegossenen Bauteils mit einer zumindest teilweise elektrisch leitfähigen Komponente. Das Verfahren umfasst die folgenden Schritte:
- Platzieren der Komponente in einer Gießform,
- Leiten eines elektrischen Stroms einer vorgebbaren Stromstärke durch die Komponente und
- Vergießen einer Vergussmasse in die Gießform.

Die Komponente wird dabei vor dem Vergießen in der Gießform platziert und das Leiten des elektrischen Stroms findet zumindest teilweise vor, während und/oder nach dem Vergießen statt.

Vergießen bedeutet, dass eine, insbesondere flüssige, Vergussmasse in eine Gießform geschüttet wird und durch das Vergießen ein gegossenes Bauteil geformt wird.

Die zumindest teilweise elektrisch leitfähige Komponente kann auch als ein in der Vergussmasse bzw. dem gegossenen Bauteil eingebettetes Teil bezeichnet werden.

Die Erfindung hat den Vorteil, dass zur Reduzierung von ungünstigen Temperaturverhältnissen bei einem Abkühlen der Vergussmasse die elektrische Leitfähigkeit der Komponente genutzt wird. Bei der Herstellung von gegossenen Bauteilen schrumpft die Vergussmasse bei einem Abkühlen und Aushärten in der Gießform. Ungünstige Temperaturverhältnisse bei dem Abkühlen der Vergussmasse können dazu führen, dass sich Spalte oder Lufteinschlüsse bilden, die die mechanischen und dielektrischen Eigenschaften des gegossenen Bauteils beeinträchtigen können. Diese Gefahr besteht besonders dann, wenn sich Komponenten/eingebettete Teile (zum Beispiel elektrische Bauteile) in der Gießform befinden, von denen sich die Vergussmasse beim Aushärten und Schrumpfen ablöst.

Zur Reduzierung von ungünstigen Temperaturverhältnissen bei einem Abkühlen der Vergussmasse wird vor und/oder während und/oder nach dem Vergießen ein elektrischer Strom durch z.B. eine Spule (Erwärmung durch den ohmschen Widerstand bei zum Beispiel einer direkten Bestromung mit Gleichstrom) oder eine Elektrode (Erwärmung zum Beispiel durch in der Elektrode induzierte Wirbelströme durch Beaufschlagen einer benachbarten Spule mit Wechselspannung) geschickt, womit sich die Komponenten (Spule, Elektrode und/oder andere Metallteile) durch die ohmschen Verluste erwärmen. Damit härtet die Vergussmasse an den Komponenten zuerst aus, verbindet sich mit den Komponenten und es wird eine Ablösung der Vergussmasse von der Komponente verhindert/reduziert.

Ein weiterer Vorteil besteht außerdem darin, sich die Komponenten/eingebetteten Teile, die in ihrer späteren Funktion zum Beispiel als passive Sensoren verwendet werden, dadurch zunutze zu machen, indem sie während der Herstellung des gegossenen Bauteils mit einem Strom beaufschlagt werden und durch die entstehenden ohmschen Widerstände die Vergussmassen lokal und kontrolliert erwärmen.

In einer weiteren Ausführungsform der Erfindung erfolgt das Leiten des elektrischen Stroms durch eine Spule und/oder eine Elektrode der Komponente.

Spulen sind einerseits Wicklungen und Wickelgüter, die geeignet sind, ein Magnetfeld zu erzeugen oder zu detektieren. Andererseits sind separate Spulen induktive passive Bauelemente, deren wesentliche Eigenschaft eine definierte Induktivität ist.

Eine in der Gießform platzierte/eingelegte Spule kann durch direkte Bestromung mit Gleichstrom erwärmt werden. Die Temperatur kann über eine Messung des ohmschen Widerstands der Spule ermittelt werden.

Es ist aber auch denkbar eine Spule mit Wechselspannung zu beaufschlagen und benachbarte Metallteile/Komponenten, wie z.B. eine Elektrode, durch induzierte Wirbelströme zu erwärmen.

Eine Elektrode ist ein Elektronenleiter, der im Zusammenspiel mit einer zweiten Elektrode (Gegenelektrode) mit einem zwischen beiden Elektroden befindlichen Medium in Wechselwirkung steht. Die meisten Elektroden bestehen aus Metall oder Graphit. Oft dienen sie vor allem einer Stromzuführung zu einer elektrischen Komponente.

Alternativ zur Spule sind auch andere induktive Bauelemente wie eine Chipinduktivität, eine Mikroinduktivität, eine Luftspule, eine Toroidspule, eine Zündspule, eine Schwingspule, eine Tauchspule, eine HelmholtzSpule und/oder eine elektrische Drossel denkbar.

In einer weiteren Ausführungsform der Erfindung ist die Stromstärke dahingehend anpassbar, einen Aushärteprozess der Vergussmasse dahingehend zu beeinflussen, mechanische und/oder dielektrische Eigenschaften des Bauteils zu optimieren.

Zu den mechanischen Eigenschaften des gegossenen Bauteils gehören unter anderem die Festigkeit, speziell Zugfestigkeit und Druckfestigkeit, Härte, Elastizität, Dauerfestigkeit, Dichte, Plastizität (Duktilität), Kriechzähigkeit und Risszähigkeit.

Als dielektrisch wird eine elektrisch schwachleitende oder elektrisch nichtleitende Substanz bezeichnet, in der die vorhandenen Ladungsträger nicht frei beweglich sind. Feldgrößen eines Dielektrikums sind die elektrische Feldstärke und die elektrische Flussdichte. Die dielektrische Leitfähigkeit, auch Permittivität oder dielektrische Funktion genannt, gibt in der Elektrodynamik und auch in der Elektrostatik die Durchlässigkeit eines Materials für elektrische Felder an.

Beides, die mechanischen Eigenschaften und die dielektrischen Eigenschaften, können durch zum Beispiel Spalte zwischen der Komponente und der erstarrten Vergussmasse und/oder Lufteinschlüsse in der Vergussmasse beeinträchtigt werden.

In einer weiteren Ausführungsform der Erfindung ist die Stromstärke dahingehend anpassbar, dass sich die Komponente durch das Leiten des elektrischen Stroms aufgrund der ohmschen Verluste durch die ohmschen Widerstände erwärmt.

Das Erwärmen ist von Vorteil, weil Grenzflächen von den Komponenten/eingebetteten Teile und der angrenzenden Vergussmasse im Inneren des gegossenen Bauteils die kritischen Bereiche sind, an denen zum Beispiel Spalte und/oder Lufteinschlüsse entstehen, welche die mechanischen Eigenschaften und die dielektrischen Eigenschaften beeinträchtigen können.

Die von außen beheizbare Wand der Gießform bzw. der an der Gießform anliegende Teil der Vergussmasse/ des gegossenen Bauteils hingegen ist kein kritischer Bereich.

Die Erfindung bietet dadurch den Vorteil, dass ein Einsatz von Heizpatronen eingespart werden kann und Wärme dort entsteht, wo sie tatsächlich benötigt wird (an den Komponenten) und zu dem Zeitpunkt erzeugt wird, an dem sie benötigt wird. Dadurch lässt sich das Aushärten und das damit verbundene Schrumpfen der Vergussmasse viel präziser steuern als mit nur externen Wärmegebern/Wärmequellen.

In einer weiteren Ausführungsform der Erfindung ist die Stromstärke in Abhängigkeit von Ergebnissen einer Simulation von Temperaturverteilungen in der Gießform, der Komponente und/oder der Vergussmasse bei einem Aushärteprozess anpassbar.

Eine Simulation von Temperaturverteilungen in der Gießform vor der Herstellung ist von Vorteil, um das Schrumpfen während des Aushärtens zu prognostizieren. Das kann dazu führen, Lufteinschlüsse, Spalte und/oder ein Ablösen der Komponente von der Vergussmasse zu reduzieren.

In einer weiteren Ausführungsform der Erfindung umfasst die Komponente einen Sensor. Der Sensor kann als Temperatur-, Feuchtigkeits-, Druck-, Licht-, Vibrations-, Schwingungs-, Beschleunigungssensor und/oder Gyroskop und/oder als optischer Sensor ausgebildet sein.

In einer weiteren Ausführungsform der Erfindung umfasst die Komponente einen metallischen und/oder nicht-metallischen Leiter. Generell kommen alle zumindest teilweise oder ganz elektrisch leitfähigen Teile als Komponenten infrage.

Beispiele für Leiter sind Leiterplatten, Kabel, Koaxialkabel, Streifenleitungen, Lecher-Leitungen, Supraleiter und Wellenleiter (Hohlleiter, Bestandteile von Antennen (Antennenelemente), Goubau-Leitungen, Zirkulatoren).

Teilweise elektrisch leitfähigen Teile können zum Beispiel aus leitenden (z.B. Steckmetall) und nichtleitenden (z.B. Kunststoffen) Teilen bestehen.

Ein Beispiel für einen nicht-metallischen Leiter ist z.B. Kompositmaterial aus einem Gummi mit Rußpartikeln. Die Rußpartikel im Gummi werden eingesetzt, um einen elektrischen Strom zu leiten. Außerdem könnte auch z.B. ein Harz oder Kleber mit metallischen (bekannt ist z.B. Silber) Partikeln verwendet als Kompositmaterial werden. Denkbar sind auch Strukturteile aus einem 3D-Druck mit eingebetteten leitfähigen Karbonfasern.

In einer weiteren Ausführungsform der Erfindung werden die Gießform und/oder die Komponente während des Verfahrens durch eine Wärmequelle beheizt. Das ist von Vorteil, da so zusätzlich zu den Komponenten die Erwärmung der z.B. Gießform und der an der Gießform angrenzenden Vergussmasse geregelt werden kann. Die Wärmequelle kann zum Beispiel eine Heizpatrone sein.

In einer weiteren Ausführungsform der Erfindung ist die Vergussmasse ein Gießharz. Alternativ kann jede gussfähige Masse als Vergussmasse verwendet werden.

Ein Gießharz ist ein Kunstharz, das flüssig zu einem Endprodukt (einem gegossenen Bauteil) verarbeitet wird und als dieses oder dessen Bestandteil erstarrt. Das noch flüssige Gießharz wird in eine wiederverwendbare oder verlorene Gießform gegossen. Dabei entstehen entweder reine Gießharzkörper mit Freiformflächen oder es werden andere Komponenten und/oder eingebettete Teile miteingeschlossen. Das Eingießen dient meist (a) einer Umhüllung und einem Schutz der Komponenten gegen Eindringen von Feuchtigkeit, Staub, Fremdkörpern, Wasser usw., (b) einer elektrischen Isolation, d.h. einer Erhöhung der Spannungsfestigkeit und eines Berührungsschutzes, (c) einer Fixierung der Komponenten untereinander, (d) einer Erhöhung der mechanischen Stabilität sowie der Vibrations- und Schockfestigkeit. Eine Erstarrung/ein Aushärten erfolgt im Gegensatz zu schmelzbaren Vergussmassen (Thermoplaste) durch eine chemische Vernetzungsreaktion und ist irreversibel (Duroplast).

Beispiele für verwendbare Vergussmassen sind Polyesterharz, Polyurethanharz (Polyurethane), Epoxidharz, Silikonharz, Vinylesterharz, Phenolharz und/oder Acrylharz (PMMA).

In einer weiteren Ausführungsform der Erfindung ist das Bauteil eine elektrische Durchführung. Eine elektrische Durchführung, auch als Gehäuseisolator bezeichnet, ist in der elektrischen Energietechnik ein elektrischer Leiter (zumindest teilweise elektrisch leitfähige Komponente), welcher von einem Isolationsmaterial umhüllt ist, und welcher zur Ein- und Durchführung von elektrischen Leitungen in ein Gebäude oder in ein größeres Gehäuse dient. Die Durchführung besteht je nach Ausführungsform aus verschiedenen Isolationsmaterialen, im Falle der Erfindung beispielsweise aus einem Gießharz, in denen ein metallischer oder nicht-metallischer Leiter (zumindest teilweise elektrisch leitfähige Komponente) eingearbeitet ist. Der Leiter (zumindest teilweise elektrisch leitfähige Komponente) ragt an beiden Enden zum Anschluss einer ein- und ausgehenden Freileitung heraus. Häufig, besonders im Bereich von Durchführungen, die mit Hochspannung betrieben werden, ist an einer Außenseite zusätzlich ein Überspannungsableiter angebracht.

Die Erfindung beansprucht außerdem eine Anordnung zur Herstellung eines gegossenen Bauteils. Die Anordnung kann auch als Herstellvorrichtung bezeichnet werden. Die Anordnung umfasst:
- eine Gießform,
- eine zumindest teilweise elektrisch leitfähige Komponente und
- ein Mittel zum Durchleiten von Strom einer vorgebbaren Stromstärke durch die Komponente.

Die Komponente ist dabei in der Gießform platziert und dafür vorgesehen, von dem Strom zumindest teilweise vor, während und/oder nach dem Vergießen einer Vergussmasse in die Gießform durchflossen zu werden.

Das Mittel kann jeder elektrische Leiter, wie beispielsweise ein Stromkabel sein. Der Strom kann beispielsweise von einer Batterie, einem Akku, einem Generator und/oder aus dem Stromnetz eingeleitet werden.

### KURZE BESCHREIBUNG DER ZEICHNUNGEN

Die Besonderheiten und Vorteile der Erfindung werden aus den nachfolgenden Erläuterungen mehrerer Ausführungsbeispiele anhand von schematischen Zeichnungen ersichtlich.

Es zeigen
- Fig. 1: ein Ablaufdiagramm des erfindungsgemäßen Verfahrens,
- Fig. 2: eine Anordnung zur Herstellung eines gegossenen Bauteils,
- Fig. 3: eine Anordnung und eine in die Gießform vergossene Vergussmasse,
- Fig. 4: ein gegossenes Bauteil und
- Fig. 5: eine elektrische Durchführung.

### DETAILLIERTE BESCHREIBUNG DER ERFINDUNG

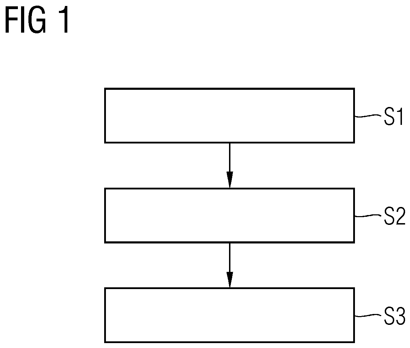

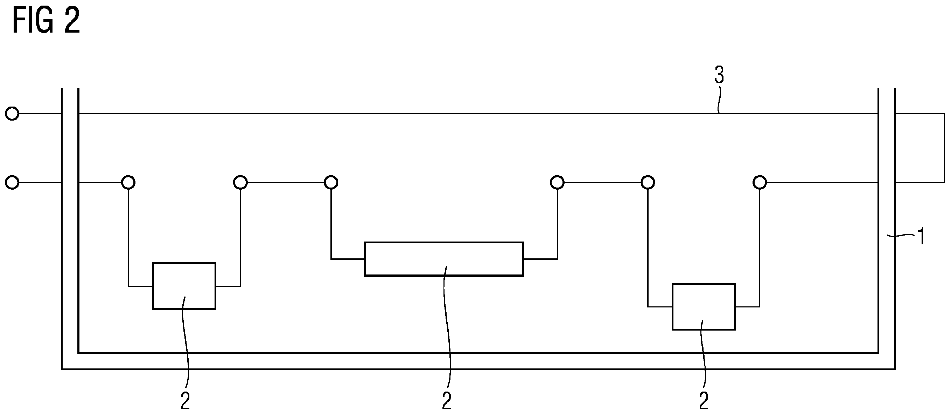

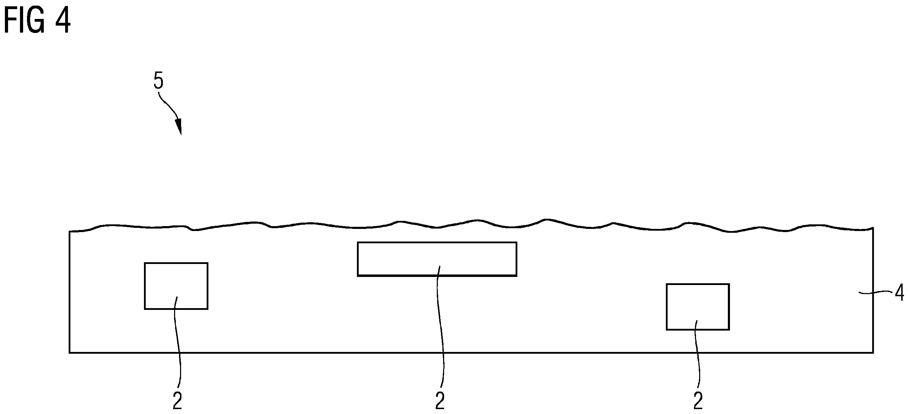

Fig. 1 zeigt ein Ablaufdiagramm des erfindungsgemäßen Verfahrens zur Herstellung eines gegossenen Bauteils 5 (dargestellt in Fig. 4) mit einer zumindest teilweise elektrisch leitfähigen Komponente 2 (dargestellt in Fig. 2 bis Fig. 4).

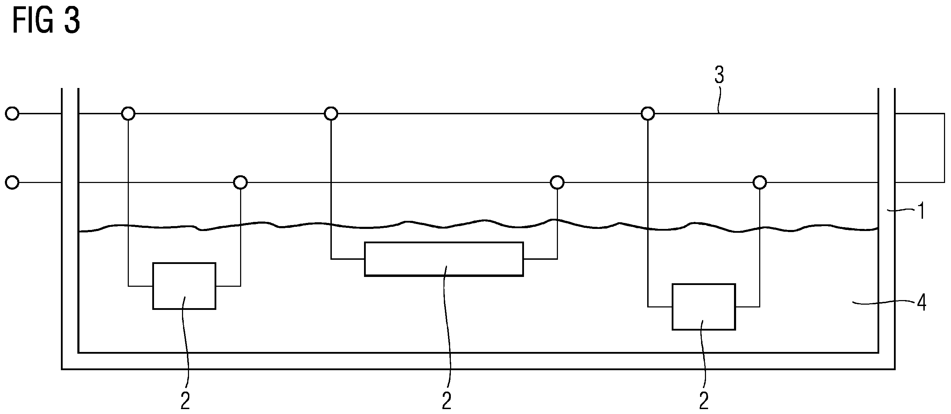

Das Verfahren umfasst die folgenden Schritte:
- Erster Schritt S1: Platzieren der Komponente 2 in einer Gießform 1 (dargestellt in Fig. 2),
- Zweiter Schritt S2: Leiten eines elektrischen Stroms einer vorgebbaren Stromstärke durch die Komponente 2 und
- Dritter Schritt S3: Vergießen einer Vergussmasse 4 (dargestellt in Fig. 3) in die Gießform 1, wobei die Komponente 2 vor dem Vergießen S3 in der Gießform 1 platziert wird und wobei das Leiten S2 des elektrischen Stroms zumindest teilweise vor, während und/oder nach dem Vergießen S3 stattfindet.

Der erste Schritt S1 des Verfahrens findet vorzugsweise vor dem dritten Schritt S3 des Verfahrens statt. Alternativ kann der dritte Schritt S3 auch vor dem ersten Schritt beginnen, anschließend der erste Schritt S1 durchgeführt werden und die Komponente 2 platziert werden und anschließend der dritte Schritt S3 fortgeführt werden.

Der zweite Schritt S2 des Verfahrens kann vor, während und/oder nach dem dritten Schritt S3 stattfinden. So kann die Komponente 2 durch das Leiten des elektrischen Stroms bereits vor dem Vergießen S3 vorgewärmt werden, während des Vergießens S3 gewärmt werden und/oder nach dem Vergießen S3 warmgehalten werden. Sao lässt sich die Temperatur der Komponente 2 zielgerichtet einstellen und der Aushärteprozess steuern. Das Wärmen der Komponente 2 hat den Vorteil, dass die Vergussmaße 4 durch die erhöhte Temperatur an der Komponente 2 schneller erhärtet. Ein Ablösen der Vergussmasse 4 von der Komponente 2 kann so reduziert oder vermieden werden.

Fig. 2 zeigt eine Anordnung zur Herstellung eines gegossenen Bauteils. Die Anordnung ist auch als Herstellvorrichtung benennbar. Die Anordnung umfasst:
- eine Gießform 1,
- eine oder mehrere zumindest teilweise elektrisch leitfähige Komponenten 2,
- ein Mittel zum Durchleiten von Strom 3 einer vorgebbaren Stromstärke durch die Komponente 2,
wobei die Komponente 2 in der Gießform 1 platziert ist und dafür vorgesehen ist, von dem Strom zumindest teilweise vor, während und/oder nach dem Vergießen einer Vergussmasse 4 (dargestellt in Fig. 3) in die Gießform 1 durchflossen zu werden.

Das Mittel zum Durchleiten von Strom 3 ist in Fig. 2 seriell geschalten. Alternativ wäre eine Parallelschaltung möglich.

Die Komponenten 2 können vor dem Vergießen in der Gießform 1 platziert werden und durch eine Stützstruktur an der gewünschten Position gehalten werden. Alternativ kann ein Teil der Vergussmasse 4 bereits vor den Komponenten 2 in die Gießform gegossen werden und die Komponenten 2 anschließend auf den Teil der bereits vergossenen Vergussmasse 4 platziert werden. Anschließend kann das Vergießen der Vergussmasse 4 fortgesetzt werden und die Komponenten 2 komplett von der Vergussmasse 4 umhüllt werden.

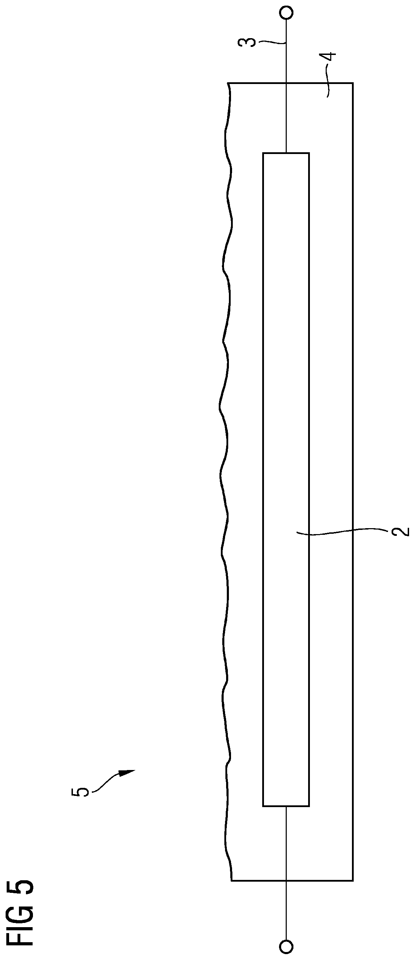

An den Komponenten 2 ist ein Mittel zum Durchleiten von Strom 3 angebracht. Das Mittel zum Durchleiten von Strom 3 kann Teil der Komponenten 2 sein und Bestandteil des Bauteils bleiben (siehe Fig. 5 im Beispiel einer elektrischen Durchführung) oder nach dem Vergießen aus dem Bauteil entfernt werden (siehe Bauteil 5 in Fig. 4).

Die Anordnung in Fig. 2 kann zum Beispiel zur Herstellung einer Leiterplatte verwendet werden.

Fig. 3 zeigt eine Anordnung zu Herstellung eines gegossenen Bauteils 5 und eine in die Gießform 1 vergossene Vergussmasse 4. Zusätzlich zu den Bestandteilen aus Fig. 2 zeigt Fig. 3 die Vergussmasse 4.

Das Mittel zum Durchleiten von Strom 3 ist in Fig. 3 parallel geschalten. Alternativ wäre eine Serienschaltung wie in Fig. 2 möglich.

Fig. 4 zeigt ein gegossenes Bauteil 5 mit einer zumindest teilweise elektrisch leitfähigen Komponenten 2. Das gegossene Bauteil 5 kann mit einem in Fig. 1 dargestelltem Verfahren und in einer in Fig. 2 dargestellten Anordnung hergestellt werden.

Das Mittel zum Durchleiten von Strom 3 (dargestellt in Fig. 2 und Fig. 3) wurde im Beispiel in Fig. 4 nach dem Vergießen aus dem Bauteil 5 entfernt. Dies ist besonders von Relevanz, wenn sich die Komponenten 2 im Randbereich des Bauteils befinden und das Mittel zum Durchleiten von Strom 3 nicht oder nur zu einem geringen Anteil mit Vergussmasse 4 umgeben ist. Alternativ kann das Mittel zum Durchleiten von Strom 3 wie in Fig. 5 dargestellt im Bauteil 5 verbleiben und nicht entfernt werden.

Die Verwendung des Verfahrens (Fig. 1) und der Anordnung (Fig. 2) hat den Vorteil, dass die Bildung von Spalten oder Lufteinschlüssen aufgrund ungünstiger Temperaturverhältnisse im Bauteil 5 in Fig. 4 bei dem Abkühlen der Vergussmasse 4 vermieden werden können, so dass die mechanischen und dielektrischen Eigenschaften des gegossenen Bauteils 5 nicht beeinträchtigen werden.

Fig. 5 zeigt eine elektrische Durchführung mit zum Beispiel einem Gießharz als Vergussmasse 4 als Beispiel für ein gegossenes Bauteil 5 mit einer zumindest teilweise elektrisch leitfähigen Komponenten 2. Die Komponente 2 weist ein Mittel zum Durchleiten von Strom 3 auf. Das Gießharz oder generell die Vergussmasse 4 dient der elektrischen Isolation der zumindest teilweise elektrisch leitfähigen Komponente 2, wie beispielsweise einem elektrischen Leiter. Die elektrische Durchführung kann zur Ein- und Durchführung von elektrischen Leitungen in ein Gebäude verwendet werden. Das Mittel zum Durchleiten von Strom 3 bleibt Bestandteil des Bauteils 5 / der elektrischen Durchführung.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

### Bezugszeichenliste

- 1: Gießform
- 2: zumindest teilweise elektrisch leitfähige Komponente
- 3: Mittel zum Durchleiten von Strom
- 4: Vergussmasse
- 5: Bauteil

- S1: Erster Schritt - Platzieren
- S2: Zweiter Schritt - Leiten
- S3: Dritter Schritt - Vergießen

## Patentansprüche

1. Verfahren zur Herstellung eines gegossenen Bauteils (5) mit einer zumindest teilweise elektrisch leitfähigen Komponente (2), wobei das Verfahren die folgenden Schritte umfasst:
- Platzieren (S1) der Komponente (2) in einer Gießform (1),
- Leiten (S2) eines elektrischen Stroms einer vorgebbaren Stromstärke durch die Komponente (2) und
- Vergießen (S3) einer Vergussmasse (4) in die Gießform (1),
wobei die Komponente (2) vor dem Vergießen (S3) in der Gießform (1) platziert wird und wobei das Leiten (S2) des elektrischen Stroms zumindest teilweise vor, während und/oder nach dem Vergießen (S3) stattfindet.

2. Verfahren nach Anspruch 1,
wobei das Leiten (S2) des elektrischen Stroms durch eine Spule und/oder eine Elektrode der Komponente (2) erfolgt.

3. Verfahren nach einem der vorhergehenden Ansprüche,
wobei die Stromstärke dahingehend anpassbar ist, einen Aushärteprozess der Vergussmasse (4) dahingehend zu beeinflussen, mechanische und/oder dielektrische Eigenschaften des Bauteils (5) zu optimieren.

4. Verfahren nach einem der vorhergehenden Ansprüche,
wobei die Stromstärke dahingehend anpassbar ist, dass sich die Komponente (2) durch das Leiten (S2) des elektrischen Stroms erwärmt.

5. Verfahren nach einem der vorhergehenden Ansprüche,
wobei die Stromstärke in Abhängigkeit von Ergebnissen einer Simulation von Temperaturverteilungen in der Gießform (1), der Komponente (2) und/oder der Vergussmasse (4) bei einem Aushärteprozess anpassbar ist.

6. Verfahren nach einem der vorhergehenden Ansprüche,
wobei die Komponente (2) einen Sensor umfasst.

7. Verfahren nach einem der vorhergehenden Ansprüche,
wobei die Komponente (2) einen metallischen und/oder nicht-metallischen Leiter umfasst.

8. Verfahren nach einem der vorhergehenden Ansprüche,
wobei die Gießform (1) und/oder die Komponente (2) während des Verfahrens durch eine Wärmequelle beheizt werden.

9. Verfahren nach einem der vorhergehenden Ansprüche,
wobei die Vergussmasse (4) ein Gießharz ist.

10. Verfahren nach einem der vorhergehenden Ansprüche,
wobei das Bauteil (5) eine elektrische Durchführung ist.

11. Anordnung umfassend
- eine Gießform (1),
- eine zumindest teilweise elektrisch leitfähige Komponente (2),
- ein Mittel zum Durchleiten von Strom (3) einer vorgebbaren Stromstärke durch die Komponente (2),
wobei die Komponente (2) in der Gießform (1) platziert ist und dafür vorgesehen ist, von dem Strom zumindest teilweise vor, während und/oder nach dem Vergießen einer Vergussmasse (4) in die Gießform (1) durchflossen zu werden.
